# EUROPÄISCHE PATENTANMELDUNG

(11) **EP 1 014 093 A1**
(43) Veröffentlichungstag der Anmeldung: **28.06.2000**
(21) Anmeldenummer: 99124669.5
(22) Anmeldetag: 10.12.1999
(51) Int. Cl.: G01P 5/10, G01P 5/18, G01F 1/708

(54) **Verfahren und Vorrichtung zur Strömungsgeschwindigkeits- und Durchflussmessung mit thermischen Pulsen**

(30) Priorität: 17.12.1998 DE 19858388
(71) Anmelder: BSH Bosch und Siemens Hausgeräte GmbH, 81669 München (DE)
(72) Erfinder: Lahrmann, Andreas, Dr., 14193 Berlin (DE)

(57) **Zusammenfassung**

Zur Messung der Strömungsgeschwindigkeit eines Mediums (2) wird ihm von einer Steuereinrichtung (7) beispielsweise mittels einer Heizeinrichtung (4) eine Temperaturveränderung aufgeprägt, die sich mit dem Medium (2) und dessen Strömungsgeschwindigkeit zu den Temperatursensoren (5) und (6) weiterbewegt. Die Steuereinrichtung (7) mißt die Laufzeit der Temperaturveränderung von der Heizeinrichtung zu einem Temperatursensor (5) oder (6) oder von einem Temperatursensor (5) zum nächsten Temperatursensor (6). Aus der Laufzeit und dem Abstand zwischen Heizeinrichtung (4) und einem Temperatursensor (5,6) oder zwischen den Temperatursensoren (5,6) berechnet die Steuereinrichtung (7) die Strömungsgeschwindigkeit des Mediums (2) und aus dieser und der Querschnittsfläche der Mediumströmung schließlich dessen Volumenstrom.
Die Temperaturänderung kann auch durch Abkühlung mit Hilfe eines Peltierelementes erfolgen.
Die Änderungen können periodisch oder unregelmäßig als stochastisches Zufallssignal erfolgen. In diesem Fall kann die Laufzeit durch Bildung einer Kreuzkorrelationsfunktion ermittelt werden.

## Beschreibung

Die Erfindung betrifft ein Verfahren zur Messung der Strömungsgeschwindigkeit beziehungsweise des Durchflusses eines Mediums sowie einen Sensor zur Durchführung dieses Verfahrens und einen nach einem solchen Verfahren arbeitenden Durchflußmesser.

Für die Durchflußmessung insbesondere von Flüssigkeiten sind zahlreiche Vorrichtungen bekannt, die nach verschiedenen Funktionsprinzipien arbeiten. In der Praxis werden oft Rotormeßgeräte eingesetzt, bei denen ein drehbar gelagerter Rotor von der Flüssigkeitsströmung in Drehrichtung angetrieben wird und dessen Umdrehungen als Maß für die Strömungsgeschwindigkeit beziehungsweise den Durchfluß erfaßt werden.

Rotormeßgeräte lassen sich einfach und kostengünstig aufbauen, weisen jedoch insbesondere die folgenden Nachteile auf. Der bewegliche Rotor ist in der Strömung angeordnet und kann so die Strömungsgeschwindigkeit verringern und Verwirbelungen verursachen. Zusätzlich besteht die Gefahr, daß Störkörper in der Strömung an ihm hängenbleiben, den Rotor blockieren oder bremsen und damit die Durchflußmessung beeinträchtigen oder gar unmöglich machen, wobei der Strömungskanal durch am Rotor hängenbleibende Störkörper oder Verunreinigungen sogar vollständig verlegt werden kann. Darüber hinaus können sich an Rotoren nachteilige Ablagerungen bilden.

Es existieren weiterhin noch zahlreiche Durchflußmesser anderer Art, wie Wirbelzähler-, Induktions-, Coriolis- oder Ultraschalldurchflußmesser, die zwar eine hohe Genauigkeit und einen großen Meßbereich besitzen, jedoch nachteiligerweise in der Regel sehr aufwendig und entsprechend teuer sind.

Aufgabe der vorliegenden Erfindung ist es, ein Verfahren zur Messung der Strömungsgeschwindigkeit beziehungsweise des Durchflusses eines Mediums sowie einen Sensor zur Durchführung dieses Verfahrens und einen nach einem solchen Verfahren arbeitenden Durchflußmesser zu schaffen, die zuverlässig und genau arbeiten, kostengünstig sind, einen einfachen Aufbau insbesondere ohne bewegliche Körper besitzen und unempfindlich gegen Verunreinigungen beziehungsweise Störkörper sind.

Erfindungsgemäß wird diese Aufgabe durch ein

Verfahren zur Messung der Strömungsgeschwindigkeit eines Mediums, bei dem an einem ersten Ort dem Medium eine Temperaturveränderung aufgeprägt wird, an wenigstens einem, in Strömungsrichtung hinter dem ersten Ort liegenden Temperaturerfassungsort die aufgeprägte Temperaturveränderung erfaßt wird, die Differenz zwischen den Zeitpunkten, an denen die Temperaturveränderung dem Medium aufgeprägt beziehungsweise an einem Temperaturerfassungsort erfaßt wird, oder zwischen den Zeitpunkten, an denen die Temperaturveränderung an einem ersten beziehungsweise einem zweiten Temperaturerfassungsort erfaßt wird, gemessen wird und die gemessene Zeitdifferenz in Abhängigkeit von der in dieser Zeitdifferenz entweder zwischen dem Ort, an dem die Temperaturveränderung dem Medium aufgeprägt wird, und einem Temperaturerfassungsort oder zwischen zwei Temperaturerfassungsorten zurückgelegten Strömungsweglänge als Maß für die Strömungsgeschwindigkeit verwendet wird, beziehungsweise ein

Verfahren zur Durchflußmessung eines Mediums, bei dem die Strömungsgeschwindigkeit des Mediums nach dem erfindungsgemäßen Verfahren zur Messung der Strömungsgeschwindigkeit gemessen und in Abhängigkeit der Querschnittfläche der Mediumströmung entlang des Abschnitts, für den die Strömungsgeschwindigkeit gemessen wird, als Maß für den Mediumdurchfluß verwendet wird, sowie durch einen
Durchflußmesser, mit einem Strömungskanal, einer Heiz- und/oder Kühleinrichtung, mit der einem Medium im Strömungskanal eine Temperaturveränderung aufgeprägt werden kann, wenigstens einem Temperatursensor, mit dem eine Temperaturveränderung des Mediums an einem Ort erfaßt werden kann, der in Strömungsrichtung hinter dem liegt, an dem dem Medium eine Temperaturveränderung aufgeprägt wurde, und einer Ansteuer- und Auswerteeinrichtung zum Ansteuern der Heiz- und/oder Kühleinrichtung und zum Auswerten der Signale des wenigstens einen Temperatursensors, und einen
Sensor zur Messung der Strömungsgeschwindigkeit eines Mediums gelöst, mit einem Substrat, auf dem ein flaches elektrisches Heizelement und wenigstens ein flacher Temperatursensor im wesentlichen in einer Linie angeordnet sind.

Der Medium- beziehungsweise Flüssigkeitsstrom bewegt sich von dem Ort, an dem ihm mittels einer Heiz- und/oder Kühleinrichtung die Temperaturveränderung aufgeprägt wird, zu wenigstens einem Temperatursensor, bei dem sich die Temperaturveränderung erst nach einer gewissen Laufzeit auswirkt, die insbesondere von seiner Strömungsgeschwindigkeit abhängt. Da während der Temperaturveränderung das Medium weiterströmt, bilden sich innerhalb des Mediumstroms in Strömungsrichtung hintereinanderliegende Bereiche unterschiedlicher Temperatur aus. Die Laufzeit wird entweder für die Meßstrecke vom Ort der Aufprägung der Temperaturveränderung zu einem Temperatursensor oder von einem Temperatursensor zu einem weiteren in Strömungsrichtung dahinter gelegenen gemessen, wobei sich die Strömungsgeschwindigkeit als Quotient der jeweils dazwischenliegenden Strömungswegstrecke und der dafür gemessenen Laufzeit berechnet.

Aus der Strömungsgeschwindigkeit, die aufgrund der Messung der Laufzeit zwischen zwei Punkten für den gesamten dazwischen liegenden Abschnitt gemessen wird, und der Querschnittsfläche des Mediumstroms entlang dieses Abschnitts kann durch eine einfache Multiplikation der Volumenstrom beziehungsweise der Durchfluß berechnet werden. Der Strömungskanal für den Mediumstrom ist vorteilhafterweise so ausgestaltet, daß seine Querschnittsfläche über diesen Abschnitt konstant bleibt. Weiterhin kann vorteilhafterweise vorgesehen sein, daß mit einem ohnehin vorhandenen Temperatursensor der Temperaturabsolutwert gemessen und zur Kompensation von Temperatureinflüssen bei der Berechnung des Durchflusses verwendet wird.

Auf diese Weise sind keine beweglichen Teile erforderlich, wodurch das Verfahren und nach diesem Verfahren arbeitende Meßgeräte einfach und kostengünstig aufgebaut werden können und unempfindlich gegenüber Verunreinigungen beziehungsweise Störkörper im Medium sind. Da die Messung auf einer Zeitmessung beruht, die digital und sehr genau durchgeführt werden kann, kann eine sehr hohe Genauigkeit erreicht werden.

Vorteilhafterweise besitzen die Abschnitte des Durchflußmessers, in dem dem Medium eine Temperaturveränderung aufgeprägt beziehungsweise in denen die Temperaturveränderungen erfaßt werden, in Strömungsrichtung des Mediums eine geringe Ausdehnung, um abrupte Temperaturveränderungen zu erzielen und diese mit hoher zeitlicher Genauigkeit erfassen zu können. Zu diesem Zweck können die Temperatursensoren und/oder die Heiz- und/oder Kühleinrichtung in Strömungsrichtung eine geringe Ausdehnung besitzen. Dies ist insbesondere bei kleinen Strömungsgeschwindigkeiten vorteilhaft, da in diesem Fall die einzelnen Bereiche des Mediums unterschiedlicher Temperatur in Strömungsrichtung sehr kleine Abmessungen und/oder sehr kleine Abstände zueinander aufweisen.

Durch eine kurze Meßstrecke und eine dementsprechend kurze Laufzeit kann erreicht werden, daß der Temperaturausgleich verschiedener Bereiche innerhalb des Mediums verringert wird, so daß sich die Temperaturveränderungen deutlicher und abrupter bei dem wenigstens einen Temperatursensor auswirken. Der Durchflußmesser kann dazu in Miniaturbauweise aufgebaut sein. Zur Messung großer Durchflüsse in einer Hauptleitung kann dabei der Durchflußmesser in eine Bypass-Leitung eingefügt sein kann, wobei das Verhältnis der Ströme in Haupt- und Bypass-Leitung bekannt ist und bei der Durchflußmessung berücksichtigt wird. Wird dagegen die Meßstrecke größer gewählt, ergibt sich für die Messung der Laufzeit eine lange Zeitdauer, so daß zeitliche Meßfehler bei der Erfassung der Zeitpunkte der Temperaturveränderungen in bezug auf die gesamte Laufzeit weniger ins Gewicht fallen.

Die Temperaturveränderung kann dem Medium durch Erhitzen mittels einer Heizeinrichtung aufgeprägt werden. Vorteilhafterweise werden dazu elektrische Heizelemente eingesetzt. Derartige Heizelemente sind in der Regel kostengünstig, lassen sich sehr einfach und insbesondere schnell ansteuern und können sehr klein ausgebildet werden.

Weiterhin kann die Temperaturveränderung des Mediums auch durch Abkühlung erzeugt werden. Dies ist in den Fällen von Vorteil, in denen eine Erwärmung des Mediums nachteilig wäre. Zu diesem Zweck kann ein Peltierelement verwendet werden, daß sich ebenfalls vorteilhafterweise elektrisch und sehr schnell ansteuern läßt. Mit einem Peltierelement kann durch Umkehrung der Stromrichtung auch eine Erwärmung erzeugt werden, so daß dem Medium eine Temperaturerhöhung und/oder eine Temperaturerniedrigung möglicherweise auch im Wechsel aufgeprägt werden kann.

Die Heiz- und/oder Kühleinrichtung und die Temperatursensoren sollten eine möglichst gut wärmeleitende Verbindung zu dem Medium besitzen. Dazu können sie im Mediumstrom angeordnet sein, so daß sie vom Medium umströmt werden.

Ferner kann die Heiz- und/oder Kühleinrichtung und/oder wenigstens ein Temperatursensor auch in der Wand des Strömungskanals integriert sein, so daß das Medium an ihnen vorbeiströmt. Auf diese Weise werden keine Verwirbelungen erzeugt oder die Strömung beeinflußt. In diesem Fall weisen die Wandabschnitte, die entlang der Meßstrecke des Mediums liegen, einen geringen Wärmeübergang zum Medium auf, um deren Temperatur wenig zu beeinflussen. Vorteilhafterweise wird für eine derartige Anordnung ein Sensor mit einem Substrat eingesetzt, auf dem eine elektrische Heizeinrichtung und wenigstens ein Temperatursensor vorzugsweise in Dickschicht- oder Dünnfilmtechnologie aufgebracht sind. Dabei kann die Heizeinrichtung als elektrischer Widerstand und der wenigstens eine Temperatursensor als Widerstandstemperatursensor ausgeführt werden, so daß auf dem Substrat nur zwei beziehungsweise drei kontaktierte Widerstandsbahnen aufgebracht werden müssen.

Die Erfassung der aufgeprägten Temperaturveränderung mit einem Temperatursensor ist stark von dessen zeitlichen Ansprechverhalten abhängig, so daß die eingesetzten Temperatursensoren vorteilhafterweise ein schnelles Ansprechverhalten aufweisen sollten. Wird die Differenz zwischen dem Zeitpunkt der Erfassung der Temperaturveränderung bei zwei oder mehr Temperatursensoren gemessen, werden vorteilhafterweise Temperatursensoren mit dem gleichen zeitlichen Ansprechverhalten eingesetzt, so daß Zeitverzögerungen bei allen gleich ausfallen und sich wegen der Differenzbildung gegenseitig aufheben.

Die aufgeprägte Temperaturveränderung kann periodisch sein, wodurch der wenigstens eine Temperatursensor entsprechend ein periodisches Ausgangssignal liefert wird. Die Laufzeit entspricht in diesem Fall dem Phasenunterschied zwischen der Temperaturveränderung der Heiz- und/oder Kühleinrichtung und dem Ausgangssignal eines Temperatursensors oder zwischen den Ausgangssignalen zweier Temperatursensoren. Dieser kann durch beispielsweise durch Messung des Zeitunterschieds zwischen den Maxima und/oder den Minima der zu vergleichenden Signalverläufe gemessen werden. Weiterhin sind für die Bestimmung des Phasenunterschieds auch kompliziertere Verfahren der Signalverarbeitung denkbar, wie beispielsweise die Bildung der Kreuzkorrelationsfunktion zwischen den Signalverläufen oder deren jeweilige Annäherung mit einer Fourierreihe bei anschließender Auswertung der Fourierkoeffizienten. Bei periodischen Temperaturveränderungen lassen sich der Phasenunterschied und damit die Strömungsgeschwindigkeit beziehungsweise der Durchfluß kontinuierlich bestimmen, so daß immer ein aktueller Wert vorliegt.

Vorteilhafterweise ist die Periodendauer der Temperaturveränderung, die dem Medium aufgeprägt wird, lang im Vergleich zur Zeitdauer, die das Medium entweder von dem Ort, an dem die Temperaturveränderung dem Medium aufgeprägt wird, zu einem Temperaturerfassungsort oder von einem ersten zum einem zweiten Temperaturerfassungsort benötigt. Damit können Mehrdeutigkeiten ausgeschlossen werden, die entstehen können, wenn die einzelnen Perioden eines Signalverlaufs schlecht voneinander zu unterscheiden sind. In diesem Fall kann es schwierig sein, die einzelnen Perioden der beiden zu vergleichenden periodischen Signale einander zuzuordnen und den Phasenunterschied zu bestimmen. Durch eine vergleichsweise lange Periodendauer wird sichergestellt, daß eine am zweiten Ort zu einem bestimmten Zeitpunkt registrierte Temperaturveränderung der unmittelbar davor erfolgten Aufprägung der Temperaturveränderung beziehungsweise der unmittelbar davor am ersten Ort erfaßten Temperaturveränderung zuzuordnen ist.

Zur Vermeidung solcher Mehrdeutigkeiten kann dem Medium auch eine Temperaturveränderung mit einem unregelmäßigen zeitlichen Verlauf aufgeprägt werden. Als Muster dafür kann ein in der elektronischen Steuereinrichtung gespeichertes Zufallssignal verwendet werden, das sich lange Zeit nicht wiederholt. Zum Bestimmen des Zeitunterschieds zwischen zwei zeitverschobenen unregelmäßigen Mustern kann die Kreuzkorrelationsfunktion zwischen ihnen gebildet werden.

Aufgrund des einfachen und kostengünstigen Aufbaus kann die Erfindung besonders vorteilhaft bei eine Flüssigkeit führenden Haushaltgeräten wie beispielsweise Wäschebehandlungsmaschinen oder Geschirrspülern eingesetzt werden. Da diese Geräte üblicherweise bereits über eine elektronische Steuerung in Gestalt eines Mikroprozessors oder Mikrocontrollers verfügen, können von diesem die Funktionen der Ansteuer- und Auswerteeinrichtung bei geringem Mehraufwand übernommen werden, so daß für den Einsatz der Erfindung in einem solchen Gerät nur noch der Sensor mit der Heizeinrichtung und zwei Temperatursensoren erforderlich ist.

Weiterhin ist es mit dem Verfahren möglich, die Beschleunigung des Mediumstroms zu messen. Dies kann durch Verwendung von zwei Temperatursensoren oder von zwei Heiz- und/oder Kühleinrichtungen geschehen. Im ersten Fall können die Laufzeiten von der Heiz- und/oder Kühleinrichtung zum ersten Temperatursensor mit denen zum zweiten Temperatursensor verglichen werden oder die Laufzeiten zwischen der Heiz- und/oder Kühleinrichtung und dem ersten Temperatursensor mit denen zwischen dem ersten und dem zweiten Temperatursensor. Bei Verwendung von zwei Heiz- und/oder Kühleinrichtungen und einem Temperatursensor ist denkbar, dem Medium jeweils ein Wechselsignal mit verschiedener Frequenz aufzuprägen, wobei die beiden Wechselsignale in dem Ausgangssignal des einen Temperatursensors von der Ansteuer- und Auswerteeinrichtung getrennt und zur Berechnung der verschiedenen Laufzeiten von den beiden Heiz- und/oder Kühleinrichtungen verwendet werden.

Weitere Einzelheiten, Merkmale und Vorteile der Erfindung ergeben sich aus der folgenden Beschreibung zweier Ausführungsbeispiele eines erfindungsgemäßen Durchflußmessers sowie eines Sensors zur Durchführung des erfindungsgemäßen Verfahrens unter Bezugnahme auf die Zeichnungen. Darin zeigen
- Fig.1: eine schematische Darstellung einer ersten Ausführungsform eines erfindungsgemäßen Durchflußmessers,
- Fig. 2: eine schematische Darstellung einer zweiten Ausführungsform eines erfindungsgemäßen Durchflußmessers, bei dem die Heizeinrichtung und die Temperatursensoren in der Wand des Strömungskanals integriert sind,
- Fig. 3: die schematischen Verläufe der Temperatur der Heizeinrichtung und der zwei Temperatursensoren des Durchflußmessers gemäß den Figuren 1 und 2, und
- Fig. 4: eine perspektivische Ansicht eines erfindungsgemäßen Sensors zur Messung der Strömungsgeschwindigkeit.

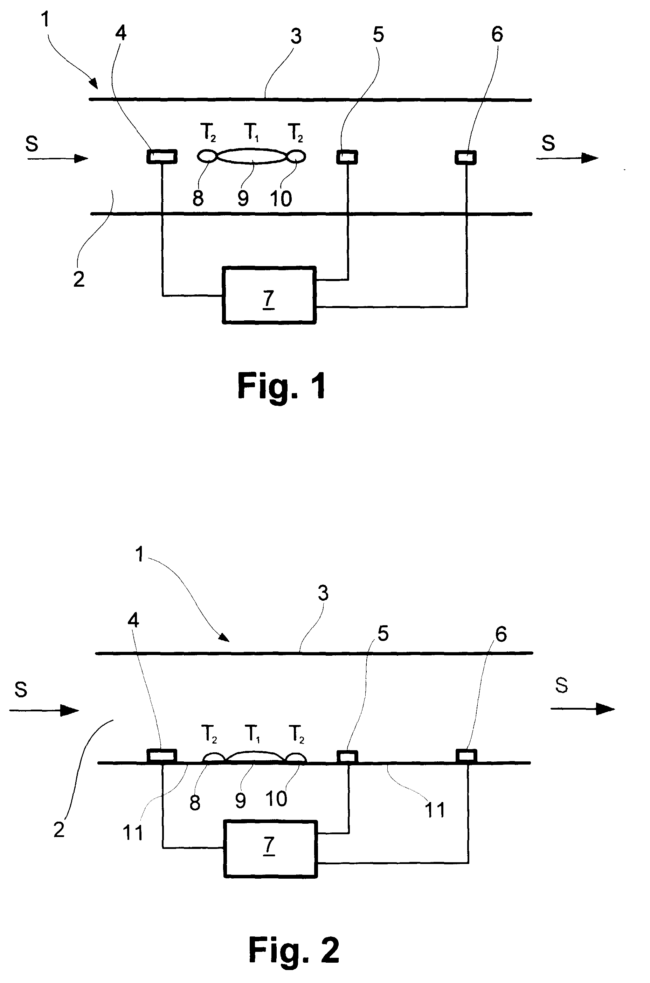

Fig. 1 zeigt schematisch einen erfindungsgemäßen Durchflußmesser 1 für eine Flüssigkeit 2 mit einem Strömungskanal 3 mit gleichbleibenden Querschnitt zur Aufnahme des Flüssigkeitsstroms. Die Strömungsrichtung der Flüssigkeit 2 ist in den Figuren 1 und 2 mit den Pfeilen S gekennzeichnet.

Innerhalb des Strömungskanals 3 sind in Strömungsrichtung S zuerst eine Heizeinrichtung 4 und dahinter zwei Temperatursensoren 5, 6 so angeordnet, daß der Teil der Flüssigkeitsströmung, der an der Heizeinrichtung 4 vorbeistreicht, danach ebenfalls an den Temperatursensoren 5 und 6 vorbeistreicht. Die Heizeinrichtung 4 und die Temperatursensoren 5, 6 sind an eine Steuereinrichtung 7 zum Ansteuern der Heizeinrichtung 4 und zum Auswerten der Ausgangssignale der Temperatursensoren 5, 6 angeschlossen.

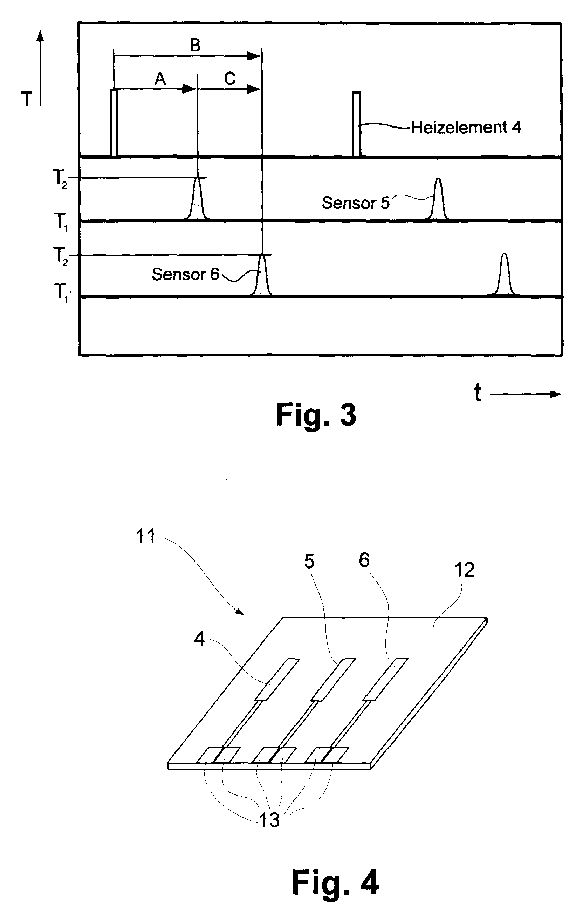

Fig. 3 gibt die schematischen Verläufe der Temperatur der Heizeinrichtung 4 und der Ausgangssignale der Temperatursensoren 5, 6 beziehungsweise die mit ihnen gemessenen Temperaturen wieder.

Die Steuereinrichtung 7 steuert die Heizeinrichtung 4 pulsartig an, so daß sich dessen Temperatur mit zeitlichen Abständen wiederholt kurzzeitig erhöht. Auf diese Weise wird die die Heizeinrichtung 4 umgebende Flüssigkeit 2 periodisch erhitzt, wobei die Flüssigkeit 2 eingangs die Temperatur T₁ besitzt und in den Heizphasen auf die Temperatur T₂ erhitzt wird. In den Figuren 1 und 2 sind beispielhaft nur zwei erhitzte Flüssigkeitsbereiche 8 und 10 dargestellt. Durch die wiederholte periodische Ansteuerung der Heizeinrichtung 4 entstehen solche erhitzten Flüssigkeitsbereiche allerdings ständig in regelmäßigen Abständen in dem Mediumstrom.

Die erhitzten Flüssigkeitsbereiche 8 und 10 mit der Strömungsgeschwindigkeit der Flüssigkeit 2 in Strömungsrichtung S weitergetragen werden, wobei dazwischen ein Flüssigkeitsbereich 9 mit der Temperatur T₁ liegt. Die Bereiche 8, 9, 10 erreichen nach einer Laufzeit A den Temperatursensor 5 und nach einer Laufzeit B den Temperatursensor 6. Die Zeitdifferenz zwischen dem Eintreffen der Flüssigkeitsbereiche 8, 9, 10 bei den beiden Temperatursensoren 5, 6 ist mit C gekennzeichnet. Die Laufzeiten A, B und C werden von der Steuereinrichtung 7 gemessen.

Für die Berechnung der Strömungsgeschwindigkeit der Flüssigkeit 2 bildet die Steuereinrichtung 7 beispielsweise den Quotienten zwischen dem Abstand zwischen den Temperatursensoren 5 und 6 und der gemessenen Laufzeit C. Der Durchfluß beziehungsweise der Volumenstrom errechnet sich durch Multiplikation der Strömungsgeschwindigkeit mit dem Querschnitt des Strömungskanals 3.

Dabei kann vorgesehen sein, daß die Steuereinrichtung 7 die Periode der Heizpulse so steuert, daß der nächste Heizpuls erst erfolgt, wenn die vom vorherigen Heizpuls verursachte Temperaturveränderung zumindest vom Temperatursensor 5 erfaßt worden ist. Auf diese Weise kann eine Mehrdeutigkeit in bezug auf die den einzelnen Heizpulsen zuzuordnenden erfaßten Temperaturveränderungen und damit eine Meßunsicherheit insbesondere bei geringen Strömungsgeschwindigkeiten vermieden werden.

In Fig. 2 ist eine Ausführungsform dargestellt, bei der die Heizeinrichtung 4 und die Temperatursensoren 5, 6 in der Wand des Strömungskanals 3 integriert sind. Dementsprechend bewegen sich die Flüssigkeitsbereiche unterschiedlicher Temperaturen 8, 9, 10 an der Wand entlang. Um die Beeinflussung der Temperatur der Flüssigkeitsbereiche 8, 9, 10 durch die Wandabschnitte 11 gering zu halten, die zwischen Heizeinrichtung 4 und dem hinteren Temperatursensor 6 liegen, ist der Wärmeübergang zwischen der Flüssigkeit 2 und diesen Wandabschnitten 11 möglichst gering. Dies kann beispielsweise dadurch erreicht werden, daß die Wandabschnitte 11 aus schlecht wärmeleitenden Material ausgebildet werden oder mit einem derartigen Material beschichtet werden. Die Laufzeiten entsprechen denen des Ausführungsbeispiels aus Figur 1. Die Strömungsgeschwindigkeit und der Durchfluß berechnen sich auf die gleiche Weise.

Fig. 4 zeigt eine perspektivische Ansicht eines Sensors 11 zur Messung der Strömungsgeschwindigkeit nach dem erfindungsgemäßen Verfahren. Auf einem Substrat sind in Dickschichttechnologie eine flache Heizeinrichtung 4 und daneben in einer Linie zwei flache Temperatursensoren 5, 6 aufgebracht. Die Heizeinrichtung 4 und die Temperatursensoren 5, 6 sind jeweils als Widerstandsstreifen ausgeführt, die mit Anschlüssen 13 zur Kontaktierung am Rand des Substrats 12 verbunden sind, wobei die Widerstandsstreifen 5, 6 zur Temperaturerfassung aus einem Material bestehen, das sich für Widerstandstemperatursensoren eignet. Ein derartiger Sensor 11 ist beispielsweise auch für den Einbau in einen erfindungsgemäßen Durchflußmesser 1 gemäß Figur 2 geeignet.

## Patentansprüche

1. Verfahren zur Messung der Strömungsgeschwindigkeit eines Mediums (2), bei dem
- an einem ersten Ort (4) dem Medium (2) eine Temperaturveränderung aufgeprägt wird,
- an wenigstens einem, in Strömungsrichtung hinter dem ersten Ort liegenden Temperaturerfassungsort (5, 6) die aufgeprägte Temperaturveränderung erfaßt wird,
- die Differenz zwischen den Zeitpunkten, an denen die Temperaturveränderung dem Medium (2) aufgeprägt beziehungsweise an einem Temperaturerfassungsort (5) erfaßt wird, oder zwischen den Zeitpunkten, an denen die Temperaturveränderung an einem ersten (5) beziehungsweise einem zweiten Temperaturerfassungsort (6) erfaßt wird, gemessen wird und
- die gemessene Zeitdifferenz in Abhängigkeit von der in dieser Zeitdifferenz entweder zwischen dem Ort (4), an dem die Temperaturveränderung dem Medium (2) aufgeprägt wird, und einem Temperaturerfassungsort (5) oder zwischen zwei Temperaturerfassungsorten (5, 6) zurückgelegten Strömungsweglänge als Maß für die Strömungsgeschwindigkeit verwendet wird.

2. Verfahren nach Anspruch 1, dadurch gekennzeichnet, daß dem Medium (2) eine periodische Temperaturveränderung aufgeprägt wird.

3. Verfahren nach Anspruch 2, dadurch gekennzeichnet, daß die Periodendauer der Temperaturveränderung, die dem Medium (2) aufgeprägt wird, lang im Vergleich zur Zeitdauer ist, die das Medium (2) entweder von dem Ort (4), an dem die Temperaturveränderung dem Medium (2) aufgeprägt wird, zum Temperaturerfassungsort (5) oder von einem ersten (5) zum einem zweiten Temperaturerfassungsort (6) benötigt.

4. Verfahren nach Anspruch 1, dadurch gekennzeichnet, daß dem Medium (2) eine Temperaturveränderung mit einem unregelmäßigen zeitlichen Verlauf aufgeprägt wird.

5. Verfahren zur Durchflußmessung eines Mediums (2), bei dem die Strömungsgeschwindigkeit des Mediums (2) mit einem Verfahren nach einem der Ansprüche 1 bis 4 gemessen und in Abhängigkeit der Querschnittfläche des Mediumstroms entlang des Abschnitts, für den die Strömungsgeschwindigkeit gemessen wird, als Maß für den Mediumdurchfluß verwendet wird.

6. Durchflußmesser (1) für ein Medium (2) zur Durchführung eines Verfahrens nach Anspruch 5, mit
- einem Strömungskanal (3),
- einer Heiz- und/oder Kühleinrichtung (4), mit der einem Medium (2) im Strömungskanal (3) eine Temperaturveränderung aufgeprägt werden kann,
- wenigstens einem Temperatursensor (5, 6), mit dem eine Temperaturveränderung des Mediums (2) an einem Ort erfaßt werden kann, der in Strömungsrichtung hinter dem liegt, an dem dem Medium (2) eine Temperaturveränderung aufgeprägt wurde, und
- einer Ansteuer- und Auswerteeinrichtung (7) zum Ansteuern der Heiz- und/oder Kühleinrichtung (4) und zum Auswerten der Signale des wenigstens einen Temperatursensors (5, 6).

7. Durchflußmesser für ein Medium (2) nach Anspruch 6, dadurch gekennzeichnet, daß die Heiz- und/oder Kühleinrichtung (4) und/oder wenigstens ein Temperatursensor (5, 6) in die Wand des Strömungskanals (3) integriert ist.

8. Durchflußmesser für ein Medium (2) nach Anspruch 7 oder 8, dadurch gekennzeichnet, daß er in Miniaturbauweise aufgebaut ist.

9. Durchflußmesser für ein Medium (2) nach einem der Ansprüche 6 bis 8, dadurch gekennzeichnet, daß er zwei Temperatursensoren (5, 6) aufweist, die im wesentlichen das gleiche zeitliche Ansprechverhalten besitzen.

10. Durchflußmesser für ein Medium (2) nach einem der Ansprüche 6 bis 9, dadurch gekennzeichnet, daß mit wenigstens einem Temperatursensor (5, 6) der Temperaturabsolutwert des Mediums (2) gemessen und von der Ansteuer- und Auswerteeinrichtung (7) zur Kompensation der Temperatur bei der Durchflußmessung verwendet werden kann.

11. Sensor zur Messung der Strömungsgeschwindigkeit eines Mediums (2) zur Durchführung eines Verfahrens nach einem der Ansprüche 1 bis 4, mit einem Substrat, auf dem ein flaches elektrisches Heizelement und wenigstens ein flacher Temperatursensor im wesentlichen in einer Linie angeordnet sind.
